# EUROPÄISCHE PATENTSCHRIFT

(11) **EP 1 352 878 B1**
(45) Veröffentlichungstag und Bekanntmachung des Hinweises auf die Patenterteilung: **01.04.2009**
(21) Anmeldenummer: 02028579.7
(22) Anmeldetag: 20.12.2002
(51) Int. Cl.: C01B 33/141

(54) **Dispersion, enthaltend Silicium-Titan-Mischoxidpulver, daraus hergestellte Grünkörper und Glasformkörper**
Dispersion comprising a powder of a silicon and titanium mixed oxide, green bodies and shaped glass articles produced therefrom
Dispersion comprenant une poudre d'un oxide mixte de silicium et de titanium, pâtes et formes en verres obtenus à partir de cette poudre

(30) Priorität: 27.02.2002 DE 10208371
(43) Veröffentlichungstag der Anmeldung: 15.10.2003
(73) Patentinhaber: Evonik Degussa GmbH, 45128 Essen (DE)
(72) Erfinder: Oswald, Monika, Dr., 63454 Hanau (DE); Deller, Klaus, Dr., 63512 Hainburg (DE); Mangold, Helmut, Dr., 63517 Rodenbach (DE); Schneider, Gerrit, Dr., 63456 Hanau (DE); Clasen, Rolf, Prof. Dr., 66125 Saarbrücken (DE); Hornfeck, Markus, Dr., 66440 Blieskastel (DE)

(56) Entgegenhaltungen:
- EP-A- 0 595 078
- EP-A- 0 850 876
- EP-A- 1 284 277

## Beschreibung

Die Erfindung betrifft eine Dispersion, die pyrogen hergestellte SiO₂-TiO₂-Mischoxidpulver enthält, sowie daraus hergestellte Grünkörper und Glasformkörper mit geringem thermischen Ausdehnungskoeffizienten.

Bekannte SiO₂-TiO₂-glasbildende Systeme zeichnen sich durch ihre guten thermischen Eigenschaften, ihren hohen Brechungsindex und ihren niedrigen thermischen Ausdehnungskoeffizienten aus. Der niedrige Ausdehnungskoeffizient ist für die Herstellung von optischen Bauteilen von Bedeutung, bei denen die Maßgenauigkeit über einen weiten Temperaturbereich gewährleistet sein muß.

Ein bekanntes Verfahren zur Herstellung von binären SiO₂-TiO₂-Gläsern ist das Schmelzen. Nachteiligerweise ist zum einen die Schmelztemperatur mit 1700 °C sehr hoch und zum anderen kommt es während der Abkühlung der Glasschmelze sehr leicht zur Phasentrennung und Entglasung.

Eine weitere bekannte, am häufigsten eingesetzte Methode zur Herstellung von SiO₂-TiO₂-Gläser ist der Sol-Gel-Prozess. Dabei handelt es sich in vielen Fällen um die Hydrolyse und Kondensation von organo-metallischen Verbindungen.

US 4,278,632 beschreibt die Herstellung von SiO₂-TiO₂ Gläsern durch Reaktion von Silicium- und Titanalkoxiden oder den teilweise hydrolysierten Alkoxiden in Gegenwart von Wasser. Nach der Hydrolyse wird das Material getrocknet und gegebenenfalls gesintert.

US 4,786,618 beschreibt ein Verfahren zur Herstellung von SiO₂-TiO₂-Glas mit geringem thermischen Ausdehnungskoeffizient (ULE = ultra-low-expansion) mittels einer Alkalisilikat-Lösung und kolloidalem TiO₂ mit einem pH-Wert von > 9. Das erhaltene Glas ist frei von Inhomogenitäten und hat einen niedrigeren Ausdehnungskoeffizienten als Kieselglas. Die so hergestellten Gläser enthalten zwischen 3 und 10 Gew.-% TiO₂.

Nachteilig bei dem Sol-Gel-Verfahren ist, daß nur geringe Gründichten erhalten werden können. Infolgedessen treten hohe Schrumpfraten beim Trocknen und Sintern auf. Diese Prozeßschritte müssen sehr langsam, oft über Tage und Wochen, durchgeführt werden, um eine Rissbildung zu vermeiden.

Weiterhin ist es bekannt, Gasphasenabscheidungsprozesse, wie zum Beispiel das sogenannte CVD-Verfahren (CVD = Chemical Vapor Deposition) zur Herstellung von SiO₂-TiO₂-Gläsern zu verwenden. Die Temperaturen bei diesen Verfahren liegen zwischen 200 und 2000 °C. Mit dieser Methode ist die Herstellung eines klaren Glases mit bis zu 16 Gew.-% TiO₂ möglich.

Aus US 2,305,659 und US 5,970,751 ist die gemeinsame Verbrennung von Silicium- und Titanvorläufern in einer Flamme unter Bildung von Partikeln, welche im allgemeinen als Glasruß oder Soot bezeichnet werden, bekannt. Die Soot-Partikel werden auf einem Träger abgeschieden und der so erhaltene poröse Körper wird anschließend bei hohen Temperaturen von ca. 1500°C zu einem opalen Glaskörper überführt, der wiederum bei noch höheren Temperaturen zu einen transparenten Glaskörper sintert. Die in der Regel sehr großen Glaskörper (Boules) werden, zum Beispiel durch Schneiden, in kleinere Stücke, wie etwa zur Herstellung von Linsen, weiterbearbeitet. Sie können auch zu größeren optischen Körpern zusammengesetzt werden.

Nachteilig bei dem Soot-Verfahren ist, daß keine dreidimensionalen Glasformkörper direkt aus dem Prozeß unter vertretbarem wirtschaftlichen Aufwand erhalten werden können. Um Glas mit verschiedenen Formen zu erhalten, ist eine maschinelle Bearbeitung notwendig (W. T. Minehan, G. L. Messing and C. G. Pantano, Titania-silica glasses prepared by sintering alkoxide derived spherical colloids. J. Non-Cryst. Solids 108 (1989) 163-168).

Aufgrund der relativ geringen Abscheiderate ist die Ausbeute bei den Abscheideprozessen aus der Gasphase eher niedrig.

Die Zusammensetzung der SiO₂-TiO₂-Soot-Partikel wird zum Beispiel in US 5,180,411 gegeben. Demnach geht man von drei unterschiedlichen Formen aus. Zum einen Agglomerate von Mischoxidpartikeln aus SiO₂ und TiO₂, mit einem Partikeldurchmesser von circa 0,1 bis 0,3 µm. Daneben gibt es feine Anatas-TiO₂-Partikel auf der Oberfläche der SiO₂-TiO₂-Agglomerate Schließlich liegen im Soot größere Anataskristalle mit einem Durchmesser zwischen 0,2 und 1 µm vor. Es ist schwierig und verlangt hohe prozeßtechnische Kontrolle, um aus diesem uneinheitlichen Pulver, welches zusätzlich noch in schwankender Zusammensetzung anfallen kann, einen einheitlichen Glaskörper herzustellen.

Da bei der Gasphasenabscheidung mittels des Soot-Verfahrens große Mengen nicht abgeschiedener SiO₂-TiO₂-Soot als Abfallprodukt anfallen, wird versucht dieses Abfallprodukt anderweitig einzusetzen. WO 00/48775 beschreibt ein Verfahren zur Herstellung von Bienenwabenstrukturen aus Glas durch Extrusion von SiO₂-TiO₂-Soot. Dabei wird der Soot in Gegenwart von organischen Additiven zu einer Paste verarbeitet, welche zunächst zu einem Grünkörper extrudiert, dann durch Erhitzen von den organischen Bestandteilen befreit und schliesslich gesintert wird. Nachteilig bei diesem Verfahren ist die Verwendung organischen Bindern, die durch Verbrennung entfernt werden müssen. Ferner können keine SiO₂-TiO₂-Glasformkörper von optischer Qualität hergestellt werden.

Es besteht somit die Aufgabe der Erfindung ein Verfahren zur Herstellung von SiO₂-TiO₂-Gläsern mit niedrigem Ausdehnungskoeffizienten zu entwickeln, das die Nachteile des Standes der Technik nicht aufweist. Insbesonders soll das Verfahren im Gegensatz zu den beschriebenen sol-gel-Verfahren nur einen geringen Schrumpf beim Trocknen und Sintern aufweisen und lange Reaktionszeiten vermeiden. Im Gegensatz zu den Gasabscheidungsverfahren soll es möglich sein dreidimensionale Formkörper von optischer Qualität direkt aus dem Prozess, ohne Nacharbeitung zu erhalten.

Gegenstand der Erfindung ist eine Dispersion, welche dadurch gekennzeichnet ist, daß sie flammenhydrolytisch hergestelltes Silicium-Titan-Mischoxidpulver mit einer BET-Oberfläche von 5 bis 500 m²/g, mit einem Titandioxidgehalt von 0,5 bis 20 Gew.-%, bezogen auf das Pulver, ferner Wasser und mindestens eine solche pH-Wert regulierende Substanz, die beim Erhitzen vollständig aus dem Reaktionsgemisch zu entfernen ist, enthält, und das Pulver einen Feststoffanteil zwischen 40 und 80 Gew.-%, bezogen auf die Dispersion aufweist.

Unter flammenhydrolytisch ist hierbei die Hydrolyse von Silicium- und Titanverbindungen in der Gasphase in einer Flamme, erzeugt durch die Reaktion von Wasserstoff und Sauerstoff, zu verstehen. Dabei werden zunächst hochdisperse, nicht poröse Primärpartikel gebildet, die im weiteren Reaktionsverlauf zu Aggregaten und diese weiter zu Agglomeraten zusammenwachsen können. Je nach Wahl der Reaktionsbedingungen können bei der Synthese auch im wesentlichen sphärische Partikel erhalten werden.

Unter Mischoxid ist die innige Vermischung von Titandioxid und Siliciumdioxid auf atomarer Ebene unter Bildung von Si-O-Ti-Bindungen zu verstehen. Daneben können die Primärpartikel auch Bereiche von Siliciumdioxid neben Titandioxid aufweisen. Von den erfindungsgemäß eingesetzten Mischoxidpulvern zu unterscheiden sind physikalische Mischungen von Siliciumdioxid- und Titandioxidpulvern, deren Verwendung zur Herstellung der erfindungsgemäßen Dispersion nicht geeignet sind. Zu unterscheiden sind auch Sole und Gele, die auch Si-O-Ti-Bindungen enthalten können, jedoch aufgrund ihrer porösen Struktur und der herstellungsbedingten niedrigen Füllgrade nicht zur Bildung der erfindungsgemäßen Dispersion geeignet sind.

Im Gegensatz zu den bekannten SiO₂-TiO₂-Soot-Partikeln wie in US 5,180,411 beschrieben, die aus Agglomeraten von Mischoxidpartikeln aus SiO₂ und TiO₂, solchen Partikeln mit feinen Aufwachsungen von Anatas-TiO₂-Partikel größeren Anataskristallen bestehen, stellen die für die erfindungsgemäße Dispersion verwendeten Silicium-Titan-Mischoxidpulver einheitliche Partikel mit Si-O-Ti-Bindungen dar, die nur innerhalb der Primärpartikel Bereiche von Siliciumdioxid und Titandioxid aufweisen können.

Das Silicium-Titan-Mischoxidpulver kann ferner Spuren von Verunreinigungen aus den Ausgangsstoffen, wie auch durch den Prozess hervorgerufene Verunreinigungen aufweisen. Diese Verunreinigungen können bis zu 0,5 Gew.-%, in der Regel jedoch nicht mehr als 100 ppm, betragen.

Das erfindungsgemäß verwendbare Silicium-Titan-Mischoxidpulver kann zum Beispiel nach der in DE-A-42 35 996 beschriebenen Methode hergestellt werden, indem Siliciumtetrachlorid und Titantetrachlorid vermischt und zusammen mit einem Wasserstoff-Luft-Gemisch verbrannt werden.

Erfindungsgemäß können weiterhin Mischoxidpartikel eingesetzt werden wie sie in der deutschen Patentanmeldung 101 63 938.4-41 vom 22.12.2001 beschrieben werden. Sie werden erhalten, indem man zwei Ströme getrennt in einen Brenner führt und dort verbrennt, danach das feste Mischoxidpulver und die heißen Gase abkühlt und die Gase vom Feststoff abtrennt. Dabei enthält der erste Strom einen verdampften Titandioxidvorläufer, bevorzugt Titantetrachlorid, Wasserstoff und Sauerstoff beziehungsweise ein Sauerstoff enthaltendes Gas. Der zweite Strom enthält einen verdampften Siliciumdioxidvorläufer, bevorzugt Siliciumtetrachlorid, Sauerstoff oder ein Sauerstoff enthaltendes Gas und/oder ein Inertgas. Der Strom der den Siliciumdioxidvorläufer enthält kann dabei an einer oder mehreren Stellen im Reaktionsraum zugeführt werden.

Weiterhin kann ein Silicium-Titan-Mischoxidpulver nach der in DE-A-196 50 500 beschriebenen Methode hergestellt werden. Dabei wird ein durch Vernebelung erhaltenes Aerosol enthaltend die Lösung oder Suspension eines Salzes einer Titanverbindung in ein Gasgemisch enthaltend ein Siliciumtetrahalogenid, Wasserstoff und Luft eingespeist und mit diesem homogen vermischt und anschliessend das Aerosol-Gas-Gemisch innerhalb einer Brennkammer in einer Flamme zur Reaktion gebracht.

Zu den Silicium-Titan-Mischoxidpulvern die in der erfindungsgemäßen Dispersion enthalten sein können, zählt auch ein mit Siliciumdioxid umhülltes, pyrogen hergestelltes Titandioxid, wie sie in der europäischen Patentanmeldung 01 119 108.7 vom 08.08.2001 beschrieben wird.

Dieses Silicium-Titan-Mischoxidpulver wird dadurch erhalten, daß man zu einer in Wasser gelösten Base unter Rühren eine TiO₂-Dispersion und zum Beispiel Tetraethoxysilan und Wasser gibt, das Reaktionsprodukt abgetrennt, gegebenenfalls gewaschen und getrocknet wird.

Die BET-Oberfläche der Silicium-Titan-Mischoxidpulver kann zwischen 5 und 500 m²/g liegen. Besonders vorteilhaft für die erfindungsgemäße Dispersion können Pulver mit BET-Oberflächen zwischen 20 und 300 m²/g sein.

Der Titandioxidgehalt des Silicium-Titan-Mischoxidpulvers kann 0,5 bis 20 Gew.-% betragen. In einer bevorzugten Ausführungsform kann der Titandioxidgehalt des Silicium-Titan-Mischoxidpulvers 2 bis 12, in einer besonders bevorzugten Ausführungsform 6 bis 8 Gew.-% betragen.

Neben dem Silicium-Titan-Mischoxidpulver enthält die erfindungsgemäße Dispersion Wasser und mindestens eine pH-Wert regulierende Substanz, die beim Erhitzen vollständig aus dem Reaktionsgemisch entfernt werden kann. Die erfindungsgemäße Dispersion enthält als Hauptbestandteil der flüssigen Phase Wasser. Organische Verbindungen, die zum Beispiel die Funktion eines Bindemittels übernehmen, liegen in der erfindungsgemäßen Dispersion nicht vor. Lediglich die pH-Wert regulierenden Substanzen können organischer Natur sein. Der pH-Wert der erfindungsgemäßen Dispersionen kann sowohl im sauren pH-Bereich (pH-Wert 1 bis 5) oder im basischen pH-Bereich (pH-Wert 8,5 bis 14) liegen. Als pH-Wert regulierende Verbindungen können vorteilhafterweise Ammoniumverbindungen, wie Ammoniak, Ammoniumfluorid, Tetraalkylammoniumhydroxide, oder Salzsäure, Essigsäure, Ameisensäure, Formiate, Acetate verwendet werden. Diese, beziehungsweise ihre Reaktionsprodukte in der Dispersion, lassen sich aufgrund ihrer Flüchtigkeit durch Erhitzen leicht beim Tempern oder Sintern des aus der erfindungsgemäßen Dispersion herstellbaren Glases entfernen. Zum Einstellen des pH-Wertes können nur minimale Mengen dieser Verbindungen in der Dispersion erforderlich sein.

Der Feststoffanteil des Silicium-Titan-Mischoxidpulver in der Dispersion kann zwischen 40 und 80 Gew.-% liegen. Der hohe Füllgrad trägt dazu bei, rißfreie Grünkörper mit einem geringen Trockenschrumpf herzustellen. Die erfindungsgemäße Dispersion kann auch bei hohen Füllgraden noch gegossen werden.

In einer besonderen Ausführungsform kann die erfindungsgemäße Dispersion ein Silicium-Titan-Mischoxidpulver mit hoher BET-Oberfläche und eines mit niedriger BET-Oberfläche enthalten, wobei die Oberfläche des Silicium-Titan-Mischoxidpulver mit hoher BET-Oberfläche mindestens doppelt so groß ist wie die Oberfläche des Silicium-Titan-Mischoxidpulver mit niedriger BET-Oberfläche, und das Gewichtsverhältnis der Silicium-Titan-Mischoxidpulver mit niedriger zu hoher BET-Oberfläche zwischen 60:40 und 99,5:0,5 liegt. Dispersionen mit dieser Zusammensetzung des Silicium-Titan-Mischoxidpulvers sind besonders geeignet für die Herstellung von Glas formkörpern mit sehr niedrigem Ausdehnungskoeffizienten.

Ein weiterer Gegenstand der Erfindung ist ein Verfahren zur Herstellung der erfindungsgemäßen Dispersion, welches dadurch gekennzeichnet ist, daß das Silicium-Titan-Mischoxidpulver in einem Medium aus Wasser und mindestens einer pH-Wert regulierenden Substanz, die beim Erhitzen vollständig aus dem Reaktionsgemisch entfernt werden kann, mittels einer Dispergiervorrichtung dispergiert wird. Als Dispergiervorrichtung können Dissolver, Zahnradscheibe, Rotor- Stator-Maschinen, Kugelmühlen, Rührwerkskugelmühlen, Planetenkneter, Planetenmixer, Hochdruckhomogenisatoren oder eine Kombination dieser Vorrichtungen eingesetzt werden.

Ein weiterer Gegenstand der Erfindung ist ein Grünkörper, welcher unter Verwendung der erfindungsgemäßen Dispersion hergestellt wird, und dessen relative Gründichte zwischen 40 und 85 %, bevorzugt bei mindestens 50 %, besonders bevorzugt zwischen 60 und 80 % liegt. Der erfindungsgemäße Grünkörper ist frei von Rissen und weist eine hohe Festigkeit auf.

Ein weiterer Gegenstand der Erfindung ist ein Verfahren zur Herstellung des Grünkörpers, welches dadurch gekennzeichnet ist, daß die erfindungsgemäße Dispersion in eine Form, bevorzugt aus hydrophobem Material, gegossen und bei Temperaturen zwischen 20 und 40°C getrocknet, gegebenenfalls nach der Entformung bei 60 bis 120°C nachgetrocknet und gegebenenfalls anschließend bei Temperaturen von ca. 800 °C (750 bis 850 °C) calciniert wird. Nach diesem Verfahren beträgt der lineare Trockenschrumpf des Grünkörpers in der Regel nicht mehr als 10 %.

Der Grünkörper kann nach dem Trocknen oder Nachtrocknen bei ca. 800°C (750 bis 850 °C) in einer Atmosphäre, die Chlor oder Fluor und Sauerstoff enthält, behandelt werden.

Ein weiterer Gegenstand der Erfindung ist ein Glasformkörper von optischer Qualität mit einem thermischen Ausdehnungskoeffizienten von maximal 0,5·10⁻⁶/K aus pyrogen hergestelltem Silicium-Titan-Mischoxidpulver mit einer BET-Oberfläche von 5 bis 500 m²/g und einem Titandioxidgehalt von 0,5 bis 20, bevorzugt 2 bis 12, besonders bevorzugt 6 bis 8 Gew.-%, bezogen auf das Pulver.

Unter optischer Qualität ist zu verstehen, daß die gesinterten Glasformkörper folgende Merkmale aufweisen:
- keine Blasigkeit
- keine detektierbare Porosität
- Dichte und Brechungsindex entsprechen den theoretischen Werten
- röntgen-amorph .
- Mittels Ramanspektroskopie können keine kristallinen TiO₂-Komponenten nachgewiesen werden.
- Die lineare thermische Ausdehnung(CTE) der Glasformkörper ist kleiner als 0,5*10⁻⁶/K im Bereich von 20°C bis 900°C.
- Die Transmission der Glasformkörper, gemessen bei 1000 nm, beträgt mehr als 99%. Dabei wird die Transmission einer zehn Millimeter dicken Scheibe gemessen und um die Reflexionsverluste an Vor- und Rückseite korrigiert.

Ein weiterer Gegenstand der Erfindung ist ein Verfahren zur Herstellung des Glasformkörpers, welches dadurch gekennzeichnet ist, daß der Grünkörper bei Temperaturen zwischen 1050 und 1600°C, bevorzugt zwischen 1100 und 1300°C, in einer Gasatmosphäre oder im Vakuum gesintert wird.

Die Gasatmosphäre kann die Gase Helium, Stickstoff, Argon, Kohlendioxid, Mischungen dieser Gase untereinander und/oder mit Sauerstoff, oder eine reduzierende Gasatmosphäre sein. Die Gasatmosphäre kann ferner geringe Mengen an Wasserdampf enthalten.

In einer bevorzugten Ausführungsform kann die Sinterung in einer Helium-Sauerstoff-Gasatmosphäre durchgeführt werden, wobei der Sauerstoffgehalt zwischen 0,1 und 70, bevorzugt zwischen 1 und 20, besonders bevorzugt zwischen 2 und 5 Vol-% Sauerstoff, liegen kann.

Weiterhin kann das Verfahren noch einen weiteren Verfahrensschritt umfassen, bei dem der Glasformkörper nach dem Sintern vollständig oder nur an der Oberfläche aufgeschmolzen wird.

Ein weiterer Gegenstand der Erfindung ist die Verwendung des erfindungsgemäßen Glasformkörpers im Bereich optischer Geräte, wie zum Beispiel Spiegel und Linsen, als Bauteil für Geräte für den extremen UV-Bereich, zum Beispiel als Spiegelträger, für Vorformen für die Herstellung von Lichtwellenleitern.

### Beispiel 1:

Dispersion: Ein hochtouriger Dissolver (maximal ca. 10000 Upm) mit einem Gesamtfassungsvermögen von ca. 500 ml und einem unten liegenden vierteiligen Rührwerkzeug (vier Blätter um jeweils 90° versetzt) wird mit 53 ml bi-destilliertem Wasser gefüllt. Es werden 1,2 g einer 25 Gew.-% wässerigen TMAH (Tetramethylammoniumhydroxid) Lösung zugegeben. Danach werden 46 g pyrogen hergestelltes SiO₂-TiO₂-Mischoxidpulver mit einem SiO₂/TiO₂-Verhältnis von 93:7 und einer BET-Oberfläche von 40 m²/g, hergestellt nach DE-A-42 35 996, eingerührt. Nach dem Rühren liegt der pH-Wert der Dispersion bei ca. 9. Es werden weitere 4,8 g der TMAH-Lösung hinzugegeben und nachfolgend 1,15 g Methylformiat zugegeben. Die Dispersion kann gegebenfalls gesiebt werden (40 µm Maschenweite). Die Dispersion hat einen Füllgrad von ca. 42 Gew.-%.

Grünkörper: Die Dispersion wird entweder in eine offene Kunststoff- oder Latex- Form gegossen oder in einer wasserundurchlässigen geschlossenen Kunststoff-Folie beliebiger Geometrie, zum Beispiel eine Schlauchfolie, unter leichtem Überdruck eingeschlossen. Nach Erwärmung im Wärmeschrank auf ca. 40°C beginnt die Verfestigung der Dispersion nach ca. 4 Minuten, nach ca. 2 Stunden sind die Proben fest.

Die offenen Formen werden etwa einen Tag bei Raumtemperatur an Luft getrocknet. Alternativ kann die Trockenzeit in einem Umluftschrank verkürzt werden.

Die geschlossenen Formen werden etwa einen Tag bei Raumtemperatur aufbewahrt, dann geöffnet und danach wie oben an Luft getrocknet.

Eine Nachtrocknung erfolgt bei 75°C und 120°C im Umluftschrank für jeweils einen Tag. Die Zeiten können durch Optimierung des Luftfeuchtigkeits- oder Temperaturprofils oder auch z.B. durch den Einsatz von Mikrowellenerwärmung verkürzt werden. Nach der Trocknung beträgt der bei 160°C entfernbare Wassergehalt der Proben < 0,1 %.

Anschliessend wird die Probe bei 800°C ca. vier Stunden calciniert. Dazu wird ein beidseitig mit Gasanschlussstutzen versehenes Kieselglasrohr benutzt, das in einen elektrisch beheizten Muffelofen eingebracht wurde.

Mit der gleichen Vorrichtung, die zum Calcinieren verwendet wurde, kann die Reinigung der Probe erfolgen. Sie wird in einem Gasstrom von 50 ml/min Chlorwasserstoffgas in Halbleiter-Qualität bei Umgebungsdruck durchgeführt. Die Temperatur in Probennähe beträgt ca. 950°C. Die Dauer des Prozesses richtet sich nach der Probengröße. Bei einer Probe mit 10 cm Durchmesser dauert der Prozeß ca. 4 Stunden.

Glasformkörper: Nachfolgend werden die Grünkörper gesintert. Dabei werden drei Sinterverfahren angewendet:
A) Sinterung im Vakuumofen Typ 1100 mit Wolfram-Widerstandsheizelementen, Fa. Thermal Technologie, Bayreuth: Druck < 1 * 10-⁴ mbar, Sintertemperatur 1350°C, Haltezeit 30 min. Die Proben zeigten nach der Sinterung eine leichte Blaufärbung durch Reduktion des TiO₂ zu Ti³⁺. Durch Variation des Temperaturprofils (z.B. 1260°C, 300 min Haltezeit) kann die Blaufärbung vermieden werden.
B) Sinterung unter reinem Helium (technisch, 500 ml/min) in einem vertikalen Zonensinterofen bei
   (1) 1350°C und einem Vortrieb von ca. 10 mm/min oder
   (2) 1200°C, Vortrieb 1 mm/min.
      Der Ofen hat ein vertikales Kieselglas-Arbeitsrohr mit 150 mm Durchmesser, die Probenhalterung erfolgt in einem Kieselglasbecher, der auf einer Aluminiumoxidstange ruht. Die Aluminiumoxidstange wird im Zentrum des Kieselglasrohres vertikal mittig durch die heiße Zone des Zonensinterofens geschoben. Der Zonensinterofen weist ein über die Höhe symmetrisches Temperaturprofil auf, das ein Maximum etwa in der Ofenmitte besitzt. Die Proben weisen bei B1 eine geringere Blaufärbung als bei der Vakuumsinterung auf. Durch Verwendung des optimierten Temperaturprofils B2 werden Proben ohne jegliche Blaufärbung erzielt.
C) Zonensinterung wie unter B) beschrieben, aber mit Helium-Sauerstoff-Gemisch. Der Sauerstoff-Anteil beträgt 3 mol-% zum Helium-Anteil. Variation der Temperaturparameter wie unter B1 und B2 beschrieben.
   Die gesinterten Glasformkörper weisen folgende Merkmale auf:
   - keine Blasigkeit
   - keine detektierbare Porosität
   - Dichte und Brechungsindex entsprechen den theoretischen Werten
   - röntgen-amorph
   - Mittels Ramanspektroskopie können keine kristallinen TiO₂-Komponenten nachgewiesen werden.
   - Die lineare thermische Ausdehnung(CTE) der Glasformkörper ist kleiner als 0,1*10⁻⁶/K im Bereich von 20°C bis 900°C.
   - Die Transmission der Glasformkörper, gemessen bei 1000 nm, beträgt mehr als 99%. Dabei wird die Transmission einer zehn Millimeter dicken Scheibe gemessen und um die Reflexionsverluste an Vor- und Rückseite korrigiert.
   Die Glasformkörper können verschiedenen Nachbehandlungen unterzogen werden:
D) Berührungsloses Aufschmelzen der Probe:
   Die Proben wurden auf der Glasdrehbank berührungsfrei in der Flamme zonenweise wandernd aufgeschmolzen. Es kann in keinem Fall ein Reboil-Effekt oder eine Blasenbildung festgestellt werden.
E) Heißisostatisches Pressen der Proben:
   Die Proben werden bei maximal 2000 bar bei einer Temperatur von höchstens 1600 °C heißisostatisch gepreßt. Als Atmosphären werden Argon, Stickstoff, Helium und Sauerstoff (max. 1200°C, 2000 bar) verwendet.
F)Tempern der Proben im Anschluss an D) oder E):
   Die Proben werden zur Einstellung eines homogenen Brechungsindexprofils getempert. Dies korreliert mit der Homogenisierung der fiktiven Temperatur in der Probe.

Bei der Nachbehandlung verschwindet die bläuliche Färbung der Glasformkörper, soweit sie bei einzelnen Proben vorliegt. Es kommt zu keiner Phasentrennung. Die Proben sind nach den Nachbehandlungsschritten weiterhin röntgenamorph. Proben, die F) durchlaufen haben, zeigen folgende Eigenschaften:

(Q1) Inklusionsklasse 0 bis 5. Die Inklusionsklassen sind entnommen dem Corning Code 7940 Quarzglas, Fa. Corning.

(Q2) Brechungsindexhomogenität < 0,5 10⁻⁶ bei einem Probendurchmesser von 100 mm und einer Probendicke von 100 mm.

Die weiteren Ausführungsbeispiele unterscheiden sich von Beispiel 1 in der Zusammensetzung und Herstellung der Dispersion. Die Tabelle gibt die Zusammensetzung der Dispersionen der Beispiele 1 bis 8 wieder. Die Qualität der Glasformkörper entspricht bei den Beispielen 1 bis 6, der von Beispiel 1. Beispiel 7 weist mit 0,2 * 10-⁶ /K im Bereich zwischen 20°C und 900°C einen geringfügig höheren Ausdehnungskoeffizienten auf.
Das Vergleichsbeispiel (Beispiel 8) geht nicht von einem Silicium-Titan-Mischoxidpulver aus, sondern von einer physikalischen Mischung aus SiO₂-Pulver und TiO₂-Pulver. Der erhaltene Glasformkörper ist, unabhängig vom verwendeten Verfahren, nicht transparent. Er zeigt deutliche kristalline Anteile, die mit Ramanspektroskopie und Röntgenbeugung nachgewiesen werden. Einige Proben weisen eine schmutzige bläuliche Färbung auf.
Auch durch Nachbehandlungsschritte können keine homogenen transparenten Gläser hergestellt werden.

**Tabelle: Zusammensetzung⁽¹⁾ der Dispersionen**

| | **Pulver** | | **pH-Wert Regulator** | |
|---|---|---|---|---|
| **Bspl.** | **BET** | **Feststoff-gehalt** | **1** | **2** |
| | m²/g | Gew.-% | | |
| 1 | 40 | 42 | TMAH | Methylformiat |
| 2 | 40 | 65 | TMAH | Methylformiat |
| 3 | 10 50 | 70 | TMAH | Methylformiat |
| 4 | 42 | 67 | NH₄F | - |
| 5 | 42 | 51 | TMAH | HCl |
| 6 | 42 | 67 | HC1 | - |
| 7 | 42 | 51 | NH₄F | - |
| 8 | 50 50 | 44 | TMAH | Methylformiat |

| | | | | |
|---|---|---|---|---|
| (1) Bspl. 1-7: SiO₂-TiO₂-Mischoxidpulver; SiO₂/TiO₂-Verhältnis: Bspl. 1-6: 93:7; Bspl. 7: 97:3; Bspl. 8: Physiaklische Mischung von SiO₂-Pulver und TiO₂-Pulver, SiO₂/TiO₂-Verhältnis = 97:3 | | | | |

### Beipiel 2:

Es wird eine Dispersion gemäß Beispiel 1, jedoch mit 53 ml bi-destilliertem Wasser, insgesamt 6 g der 25 Gew.-% wässerigen TMAH-Lösung, 105 g pyrogen hergestelltem SiO₂-TiO₂-Mischoxidpulver und 1,15 g Methylformiat hergestellt. Die Dispersion hat einen Füllgrad von ca. 65 Gew.-%.

Gegenüber Beispiel 1 wird eine geringere Trocken- und Sinterschrumpfung festgestellt.

### Beispiel 3:

Es wird eine Dispersion gemäß Beispiel 1 , jedoch mit 53 ml bi-destilliertem Wasser, insgesamt 6 g der 25 Gew.-% wässerigen TMAH-Lösung, 128 g pyrogen hergestelltem SiO₂-TiO₂-Mischoxidpulver (BET = 10 m²/g), 6 g pyrogen hergestelltem SiO₂-TiO₂-Mischoxidpulver (BET = 50 m²/g), wobei beide Pulver ein SiO₂/TiO₂-Verhältnis von 93:7 aufweisen, und 1,15 g Methylformiat hergestellt. Die Dispersion weist einen Feststoffgehalt von 70 Gew.-% auf. Der Grünkörper weist eine hohe mechanische Festigkeit und einen geringen Trockenschrumpf auf.

### Beispiel 4:

300 ml bidestilliertes Wasser, 2,4 g Ammoniumfluorid, 610 g SiO₂-TiO₂-Mischoxidpulver (BET = 42 m²/g, SiO₂/TiO₂ = 93:7) werden mittels eines Dissolvers dispergiert. Der Feststoffgehalt der Dispersion beträgt 67 Gew.-%. Die Dispersion wird zwei Stunden unter Vakuum gerührt, dabei werden Luftblasen weitestgehend entfernt. Danach wird die Dispersion mit einem Sieb mit 60 µm Maschenweite gesiebt. Die Proben werden wie in Beispiel 1 beschrieben in offene Formen und geschlossene Formen gefüllt. Nach 48 Stunden bei Raumtemperatur werden die Proben entformt.

### Beispiel 5:

210 g SiO₂-Ti02-Mischoxidpulver (BET = 42 m²/g, SiO₂/TiO₂ = 93:7) werden in 300 ml bidestilliertem Wasser mittels eines Dissolvers dispergiert. Der Feststoffgehalt der Dispersion beträgt 41 Gew.-%. Nach Zugabe von 2 ml TMAH (25 prozentige Lösung) werden weitere 100 g SiO₂-TiO₂-Mischoxidpulver zugegeben. Der Feststoffgehalt der Dispersion beträgt jetzt 51 Gew.-%. Danach werden 0,5 ml Salzsäure (30 Gew.-%) zugegeben und die Dispersion in Formen gegossen. Die Trocknung und Sinterung erfolgt wie unter Beispiel 1 beschrieben.

### Beispiel 6:

300 ml bi-destilliertes Wasser und insgesamt 610 g SiO₂-TiO₂-Mischoxidpulver (BET = 42 m²/g, SiO₂/TiO₂ = 93:7) werden mittels eines Dissolvers dispergiert. Dabei wird nach der Zugabe von jeweils 100 g Mischoxidpulver der pH-Wert durch Zugabe von konzentrierter Salzsäure jeweils wieder auf pH 2,0 eingestellt. Der Feststoffgehalt der Dispersion beträgt 67 Gew.-% nach dem Dispergieren der Gesamtmenge des Pulvers.

Die Dispersion wird zwei Stunden unter Vakuum gerührt, dabei werden Luftblasen weitestgehend entfernt. Danach wird die Dispersion mit einem Sieb mit 60 µm Maschenweite gesiebt. Die Proben werden wie in Beispiel-1 beschrieben in offene Formen gefüllt. Nach 48 Stunden bei Raumtemperatur werden die Proben entformt. Danach wird nach Beispiel 1 weiter verfahren.

### Beispiel 7:

Wie Beispiel 4, jedoch mit einem pyrogen hergestellten SiO₂-TiO₂-pulver mit einem SiO₂/TiO₂-Verhältnis von 97:3.

### Beispiel 8 (Vergleichsbeispiel):

300 ml bi-destilliertes Wasser, 2,4 g Ammoniumfluorid, 220 g pyrogen hergestelltes SiO₂-Pulver (BET = 50 m²/g; OX 50, Degussa AG) und 17 g pyrogen hergestelltes TiO₂-Pulver (BET = 50 m²/g) werden mittels eines Dissolvers dispergiert. Damit wird ein SiO₂/TiO₂-Verhältnis von 97:3 in der Dispersion erreicht. Der Feststoffgehalt der Dispersion beträgt 44 Gew.-%.

Die Dispersion wird zwei Stunden unter Vakuum gerührt, dabei werden Luftblasen weitestgehend entfernt. Danach wird die Dispersion mit einem Sieb mit 60 µm Maschenweite gesiebt. Die Proben werden wie in Beispiel 1 beschrieben in offene Formen und geschlossene Formen gefüllt. Nach 48 Stunden bei Raumtemperatur werden die Proben entformt. Weiteres Vorgehen entsprechend Beispiel 1.

## Patentansprüche

1. Dispersion, **dadurch gekennzeichnet, daß** sie flammenhydrolytisch hergestelltes Silicium-Titan-Mischoxidpulver mit einer BET-Oberfläche von 5 bis 500 m²/g, mit einem Titandioxidgehalt von 0,5 bis 20 Gew.-%, bezogen auf das Pulver, ferner Wasser und mindestens eine solche pH-Wert regulierende Substanz, die beim Erhitzen vollständig aus dem Reaktionsgemisch zu entfernen ist, enthält, und das Pulver einen Feststoffanteil zwischen 40 und 80 Gew.-%, bezogen auf die Dispersion aufweist.

2. Dispersion nach Anspruch 1, **dadurch gekennzeichnet, daß** sie ein Silicium-Titan-Mischoxidpulver mit hoher BET-Oberfläche und eines mit niedriger BET-Oberfläche enthält, wobei die Oberfläche des Silicium-Titan-Mischoxidpulver mit hoher BET-Oberfläche mindestens doppelt so groß ist wie die Oberfläche des Silicium-Titan-Mischoxidpulvers mit niedriger BET-Oberfläche, und das Gewichtsverhältnis der Silicium-Titan-Mischoxidpulver mit niedriger zu hoher BET-Oberfläche zwischen 60:40 und 99,5:0,5 liegt.

3. Verfahren zur Herstellung der Dispersion gemäß den Ansprüchen 1 oder 2, **dadurch gekennzeichnet, daß** das Silicium-Titan-Mischoxidpulver in einem Medium aus Wasser und mindestens einer pH-Wert regulierenden Substanz, die beim Erhitzen vollständig aus dem Reaktionsgemisch entfernt werden kann, mittels einer Dispergiervorrichtung dispergiert wird.

4. Grünkörper hergestellt unter Verwendung der Dispersion nach den Ansprüchen 1 oder 2, **dadurch gekennzeichnet, daß** seine relative Gründichte zwischen 40 und 85 %, bevorzugt bei mindestens 50 %, besonders bevorzugt zwischen 60 und 80 % liegt.

5. Verfahren zur Herstellung des Grünkörpers gemäß Anspruch 4, **dadurch gekennzeichnet, daß** die Dispersion gemäß den Ansprüchen 1 oder 2 in eine Form, bevorzugt aus hydrophobem Material, gegossen, bei Temperaturen zwischen 20 und 40°C getrocknet, gegebenenfalls nach der Entformung bei 60 bis 120°C nachgetrocknet, und gegebenenfalls anschließend bei Temperaturen von ca. 800°C (750 bis 850 °C) calciniert wird.

6. Verfahren nach Anspruch 5, **dadurch gekennzeichnet, dass** der Grünkörper nach dem Trocknen oder Nachtrocknen bei ca. 800°C (750 bis 850 °C) in einer Atmosphäre, die Chlor, Chlorwasserstoff, Fluor und/oder Sauerstoff enthält, behandelt wird.

7. Glasformkörper von optischer Qualität mit einem thermischen Ausdehnungskoeffizienten von maximal 0,5•10⁻⁶/K aus pyrogen hergestelltem Silicium-Titan-Mischoxidpulver mit einer BET-Oberfläche von 5 bis 500 m²/g, mit einem Titandioxidgehalt von 0,5. bis 20 Gew.-%, bezogen auf das Pulver.

8. Verfahren zur Herstellung des Glasformkörpers nach Anspruch 7, **dadurch gekennzeichnet, daß** der Grünkörper gemäß Anspruch 4 bei Temperaturen zwischen 1050 und 1600°C in einer Gasatmosphäre oder im Vakuum gesintert wird.

9. Verfahren nach Anspruch 8, **dadurch gekennzeichnet, daß** der Glasformkörper nach dem Sintern vollständig oder nur an der Oberfläche aufgeschmolzen wird.

10. Verwendung des Glasformkörpers gemäß dem Anspruch 7 im Bereich optischer Geräte, wie zum Beispiel Spiegel und Linsen, als Bauteil für Geräte für den extremen UV-Bereich, zum Beispiel als Spiegelträger, für Vorformen für die Herstellung von Lichtwellenleitern.

## Claims

1. Dispersion, **characterized in that** it comprises silicon/titanium mixed oxide powder prepared by flame hydrolysis and having a BET surface area of 5 to 500 m²/g and a titanium dioxide content of 0.5 to 20 wt.%, based on the powder, water and at least one such pH-regulating substance as is completely removable from the reaction mixture on heating, and the powder has a solids content of between 40 and 80 wt.%, based on the dispersion.

2. Dispersion according to Claim 1, **characterized in that** it comprises a silicon/titanium mixed oxide powder having a high BET surface area and a silicon/titanium mixed oxide powder having a low BET surface area, the surface area of the silicon/titanium mixed oxide powder of high BET surface area being at least twice the size of the surface area of the silicon/titanium mixed oxide powder of low BET surface area and the weight ratio of the silicon/titanium mixed oxide powders of low to high BET surface area being between 60:40 and 99.5:0.5.

3. Process for the preparation of the dispersion according to Claims 1 or 2, **characterized in that** the silicon/titanium mixed oxide powder is dispersed by means of a dispersing device in a medium composed of water and at least one pH-regulating substance which is completely removable from the reaction mixture on heating.

4. Green body prepared using the dispersion according to Claims 1 or 2, **characterized in that** its relative green density is between 40 and 85%, preferably at least 50% and more preferably between 60 and 80%.

5. Process for the preparation of the green body according to Claim 4, **characterized in that** the dispersion according to Claims 1 or 2 is poured into a mould, preferably composed of hydrophobic material, dried at temperatures of between 20 and 40°C, optionally after-dried at 60 to 120°C after removal from the mould and optionally then calcined at temperatures of about 800°C (750 to 850°C).

6. Process according to Claim 5, **characterized in that** the green body after drying or after-drying is treated at about 800°C (750 to 850°C) in an atmosphere comprising chlorine, hydrogen chloride, fluorine and/or oxygen.

7. Shaped glass article of optical quality with a thermal expansion coefficient of not more than 0.5 10⁻⁶/K composed of pyrogenically prepared silicon/titanium mixed oxide powder having a BET surface area of 5 to 500 m²/g, having a titanium dioxide content of 0.5 to 20 wt.%, based on the powder.

8. Process for the preparation of the shaped glass article according to Claim 7, **characterized in that** the green body according to Claim 4 is sintered at temperatures of between 1050 and 1600°C in a gas atmosphere or in a vacuum.

9. Process according to Claim 8, **characterized in that**, after sintering, the shaped glass article is melted completely or only at the surface.

10. Use of the shaped glass article according to Claim 7, in the field of optical apparatuses, for example mirrors and lenses, as a component for apparatuses for the extreme UV range, for example as a mirror support, for preforming for the preparation of light-wave conductors.

## Revendications

1. Dispersion, **caractérisée en ce qu'**elle contient une poudre d'oxyde mixte silicium-titane fabriquée par hydrolyse à la flamme, ayant une surface BET de 5 à 500 m²/g et une teneur en dioxyde de titane de 0,5 à 20 % en poids par rapport à la poudre, ainsi que de l'eau et au moins une substance régulant le pH, qui est complètement éliminée du mélange réactionnel par chauffage, la poudre présentant une teneur en solides comprise entre 40 et 80 % en poids par rapport à la dispersion.

2. Dispersion selon la revendication 1, **caractérisée en ce qu'**elle contient une poudre d'oxyde mixte silicium-titane ayant une grande surface BET et une ayant une petite surface BET, la surface de la poudre d'oxyde mixte silicium-titane qui présente une grande surface BET étant au moins deux fois plus grande que la surface de la poudre d'oxyde mixte silicium-titane qui présente une petite surface BET, et le rapport de poids entre la poudre d'oxyde mixte silicium-titane qui présente une petite surface BET et celle qui présente une grande surface BET étant compris entre 60:40 et 99, 5: 0, 5.

3. Procédé de fabrication de la dispersion selon les revendications 1 ou 2, **caractérisé en ce que** la poudre d'oxyde mixte silicium-titane est dispersée à l'aide d'un dispositif de dispersion dans un milieu à base d'eau et d'au moins une substance régulant le pH, qui peut être complètement éliminée du mélange réactionnel par chauffage.

4. Corps vert fabriqué en utilisant la dispersion selon les revendications 1 ou 2, **caractérisé en ce que** sa densité verte relative est comprise entre 40 et 85 %, est de préférence d'au moins 50 % et est comprise de manière particulièrement préférée entre 60 et 80 %.

5. Procédé de fabrication du corps vert selon la revendication 4, **caractérisé en ce que** la dispersion selon les revendications 1 ou 2 est versée dans un moule, de préférence en un matériau hydrophobe, séchée à des températures comprises entre 20 et 40 °C, éventuellement soumise à un séchage ultérieur à 60 à 120 °C après le démoulage et ensuite éventuellement calcinée à des températures d'environ 800 °C (750 à 850 °C).

6. Procédé selon la revendication 5, **caractérisé en ce que** le corps vert est traité à environ 800 °C (750 à 850 °C) dans une atmosphère qui contient du chlore, du chlorure d'hydrogène, du fluor et/ou de l'oxygène après le séchage ou le séchage ultérieur.

7. Corps moulé en verre de qualité optique qui présente un coefficient de dilatation thermique maximal de 0,5- 10⁻⁶ /K à base d'une poudre d'oxyde mixte silicium-titane fabriquée par voie pyrogène qui présente une surface BET de 5 à 500 m²/g et une teneur en dioxyde de titane de 0,5 à 20 % en poids par rapport à la poudre.

8. Procédé de fabrication du corps moulé en verre selon la revendication 7, **caractérisé en ce que** le corps vert selon la revendication 4 est fritté à des températures comprises entre 1 050 et 1 600 °C dans une atmosphère gazeuse ou sous vide.

9. Procédé selon la revendication 8, **caractérisé en ce que** le corps moulé en verre est fondu en totalité ou uniquement en surface après le frittage.

10. Utilisation du corps moulé en verre selon la revendication 7 dans le domaine des appareils optiques, tels que par exemple les miroirs et les lentilles, en tant que composant pour des appareils pour le domaine de l'UV extrême, par exemple en tant que support pour miroir, pour le préformage pour la fabrication de fibres optiques.
